# FASCICULE DE BREVET EUROPEEN

(11) **EP 3 775 497 B1**
(45) Date de publication et mention de la délivrance du brevet: **19.04.2023**
(21) Numéro de dépôt: 19736416.9
(22) Date de dépôt: 28.05.2019
(51) Int. Cl.: F01D 9/06, F02C 7/14, B33Y 80/00

(54) **AUBE DE TURBOMACHINE COMPRENANT UN PASSAGE INTERNE D'ÉCOULEMENT DE FLUIDE ÉQUIPÉ D'UNE PLURALITÉ D'ÉLÉMENTS PERTURBATEURS À AGENCEMENT OPTIMISÉ**
TURBOMASCHINENSCHAUFEL MIT EINEM INNEREN STRÖMUNGSKANAL MIT EINER VIELZAHL VON OPTIMAL ANGEORDNETEN STÖRELEMENTEN
TURBOMACHINE BLADE COMPRISING AN INTERNAL FLUID FLOW PASSAGE EQUIPPED WITH A PLURALITY OF OPTIMALLY ARRANGED DISRUPTIVE ELEMENTS

(30) Priorité: 29.05.2018 FR 1854567
(43) Date de publication de la demande: 17.02.2021
(73) Titulaire: SAFRAN AIRCRAFT ENGINES, 75015 Paris (FR)
(72) Inventeur: DREANO, Sébastien, Vincent, François, 77550 MOISSY-CRAMAYEL (FR); BOUTALEB, Mohammed-Lamine, 77550 MOISSY-CRAMAYEL (FR)
(74) Mandataire: Brevalex
(86) Numéro de dépôt international: PCT/FR2019/051240
(87) Numéro de publication internationale: WO 2019/229362

(56) Documents cités:
- EP-A1- 3 144 485
- FR-A1- 3 046 811
- US-A1- 2017 284 417

## Description

### DOMAINE TECHNIQUE

La présente invention concerne la conception d'une d'aube de turbomachine d'aéronef agencée dans tout ou partie d'un flux d'air et formant surface d'échange thermique entre ledit flux d'air et un fluide qui circule en son sein.

### ÉTAT DE LA TECHNIQUE ANTÉRIEURE

Sur certaines turbomachines à double flux, il est connu d'implanter des aubes directrices de sortie en aval de la soufflante pour redresser le flux qui s'échappe de celle-ci, pour alimenter un flux secondaire générant une poussée principale, et aussi éventuellement pour remplir une fonction structurale. Cette dernière fonction vise en effet à permettre le passage des efforts du centre de la turbomachine, vers une virole extérieure située dans le prolongement du carter de soufflante. Dans ce cas de figure, une attache moteur est classiquement agencée sur ou à proximité de cette virole extérieure, pour assurer la fixation entre la turbomachine et un mât d'accrochage de l'aéronef.

Il a été proposé d'utiliser ces aubes directrices comme des échangeurs thermiques de substitution, portant la dénomination d'OGV échangeurs. Il s'agit d'une fonction d'échangeur thermique entre l'air du flux secondaire qui s'écoule le long du profil aérodynamique de l'aube, et un fluide hydraulique de lubrification circulant en son sein. Cette fonction additionnelle d'échangeur thermique a été décrite dans le document US 8 616 834 qui prévoit d'intégrer un conduit d'écoulement équipé d'ailettes rapportées entre les deux parois aérodynamiques de l'aube, ou encore du document FR 2 989 110 dans lequel l'aube est formée de plusieurs portions délimitant différents passages d'écoulement de flux pour augmenter la surface d'échange. Ces ailettes forment en effet des éléments perturbateurs du flux traversant le conduit d'écoulement de fluide hydraulique. Le document FR 3 046 811 décrit une autre aube directrice avec des ailettes forment des éléments perturbateurs.

Le fluide hydraulique destiné à être refroidi par les aubes directrices de sortie peut provenir de différentes zones de la turbomachine. Il peut en effet s'agir d'un fluide circulant à travers des enceintes de lubrification des paliers de roulement supportant les arbres moteur et/ou le moyeu de soufflante, ou encore d'un fluide dédié à la lubrification des éléments de transmission mécanique de la boîte d'accessoires (de l'anglais AGB « Accessory Geared Box »). Enfin, il peut aussi servir à la lubrification d'un réducteur d'entraînement de la soufflante, lorsqu'un tel réducteur est prévu sur la turbomachine afin de diminuer la vitesse de rotation de sa soufflante.

Les besoins croissants en lubrifiant nécessitent d'adapter en conséquence la capacité de dissipation de chaleur, associée aux échangeurs destinés au refroidissement du lubrifiant. Le fait d'attribuer un rôle d'échangeur thermique aux aubes directrices de sortie, comme dans les solutions des deux documents cités ci-dessus, permet en particulier de diminuer, voire de supprimer les échangeurs conventionnels du type ACOC (de l'anglais « Air Cooled Oil Cooler »). Ces échangeurs ACOC étant généralement agencés dans la veine secondaire, leur diminution / suppression permet de limiter les perturbations du flux secondaire, et d'augmenter ainsi le rendement global de la turbomachine.

En pratique, recourir aux procédés usuels d'assemblage pour fabriquer l'aube de forme complexe ne garantit pas un contact en tout point entre l'ensemble des ailettes et les parois. Cet aspect pénalise la résistance mécanique globale de l'aube, diminue le transfert effectif par conduction et induit des fuites dues aux fortes pressions générées par la circulation du fluide hydraulique. En outre, une modification du profil de l'aube pour augmenter d'avantage son potentiel d'échange thermique se réalise souvent au détriment des performances au sens de l'aérodynamique.

Cette situation conduit à reconsidérer la méthode de fabrication en adoptant le procédé de fabrication additive sur lit de poudre, par empilement de couches de matière parallèles entre elles à partir d'un plateau de fabrication. Plus spécifiquement, il a été envisagé la technique de fabrication additive par fusion laser métallique, avec des ailettes fabriquées d'un seul tenant avec les parois aérodynamiques.

Dans le prolongement de la mise en oeuvre par fabrication additive, l'invention a pour but de proposer une aube comprenant un passage interne de fluide équipé d'ailettes, dits éléments perturbateurs, dont la configuration géométrique permet d'augmenter l'efficacité d'échange pour satisfaire les besoins croissants en performances, tout en augmentant la résistance de l'aube.

### EXPOSÉ DE L'INVENTION

Pour répondre au moins partiellement à ce besoin, l'invention a pour objet une aube de turbomachine d'aéronef comprenant une partie aérodynamique s'étendant suivant un axe d'envergure et fabriquée d'un seul tenant par fabrication additive, ladite partie aérodynamique comprenant une paroi d'intrados et une paroi d'extrados comprenant respectivement une face intérieure d'intrados et une face intérieure d'extrados, ces faces intérieures d'intrados et d'extrados étant en vis-à-vis l'une l'autre et délimitant conjointement un passage interne de fluide comprenant au moins un canal définissant une direction générale de propagation de fluide en son sein, ce canal étant traversé par une pluralité d'éléments perturbateurs de flux reliant les parois d'intrados et d'extrados en présentant chacun un premier point de raccord sur la face intérieure d'intrados, et un second point de raccord sur la face intérieure d'extrados.

Selon l'invention, les éléments perturbateurs s'étendent par rapport à la direction générale de propagation de fluide en formant un angle variable d'un élément perturbateur à un autre, et les éléments perturbateurs sont irrégulièrement espacés les uns des autres de sorte que les premiers points de raccord sont agencés de manière désordonnée sur la face intérieure d'intrados, et/ou les seconds points de raccord sont agencés de manière désordonnée sur la face intérieure d'extrados.

Avec cette solution, le potentiel d'échange thermique est augmenté et la tenue mécanique de la partie aérodynamique est renforcée. En particulier, cette aube présente avantageusement une comptabilité améliorée avec le procédé de fabrication additive sur lit de poudre en limitant l'incidence du sens de fabrication, qui peut aboutir à des imperfections sur les parois aérodynamiques en raison d'un caractère ordonné des éléments perturbateurs de l'art antérieur.

L'invention concerne également une aube ainsi définie, le passage interne de fluide comprend un premier et un second canal définissant chacun une direction de propagation de fluide sensiblement parallèle à l'axe d'envergure, ces premier et second canaux étant traversés par les éléments perturbateurs dont les premiers et second points de raccord ne suivent pas un alignement particulier le long de la direction de propagation de fluide.

L'invention concerne également une aube ainsi définie, telle que pour tout point de raccord quelconque parmi les premiers points de raccord (66a) et/ou les seconds points de raccords agencés de manière désordonnée, ce point de raccord présente autour de lui un nombre N de points de raccord formant une ligne fermée, délimitant intérieurement un espace dans lequel se trouve le seul point de raccord quelconque, la distance entre ce dernier est chacun desdits N points est différente pour au moins trois d'entre eux, et de préférence pour chacun d'entre eux.

L'invention concerne également une aube ainsi définie, telle que :
- dans une vue depuis l'intérieur du passage de fluide, selon une direction localement sensiblement orthogonale à et orientée vers la face intérieure d'intrados, tous les premiers points de raccord de celle-ci sont chacun agencés à l'intersection entre une ligne fictive primaire s'étendant parallèlement à la direction de propagation du fluide, et une ligne fictive secondaire perpendiculaire à la ligne fictive primaire, l'ensemble des premières lignes fictives étant toutes distinctes les unes des autres et l'ensemble des secondes lignes fictives étant toutes distinctes les unes des autres ; et/ou
- dans une vue depuis l'intérieur du passage de fluide, selon une direction localement sensiblement orthogonale à et orientée vers la face intérieure d'extrados, tous les seconds points de raccord de celle-ci sont chacun agencés à l'intersection entre une ligne fictive primaire s'étendant parallèlement à la direction de propagation du fluide, et une ligne fictive secondaire perpendiculaire à la ligne fictive primaire, l'ensemble des premières lignes fictives étant toutes distinctes les unes des autres et l'ensemble des secondes lignes fictives étant toutes distinctes les unes des autre.

L'invention concerne également une aube ainsi définie dans laquelle les éléments perturbateurs sont espacés deux à deux au point le plus proche d'une distance permettant l'écoulement du fluide, cette distance étant préférentiellement comprise entre 2 et 10 mm.

L'invention concerne également une aube ainsi définie, dans laquelle la valeur de l'angle formé entre chaque élément perturbateur et la direction de propagation de fluide est comprise entre 70 et 110°.

L'invention concerne également une aube ainsi définie, dans laquelle les éléments perturbateurs s'étendent en formant un angle supérieur à un angle A prédéfini par rapport à un plan parallèle aux couches de fabrication successives constituant la partie aérodynamique de l'aube en deçà duquel ces éléments perturbateurs devraient être supportés durant la fabrication, l'angle A étant préférentiellement supérieur à 30°.

L'invention concerne également une aube ainsi définie, dans laquelle les éléments perturbateurs s'étendent en formant un angle inférieur à 70° par rapport à un plan parallèle aux couches successives constituant l'aube.

L'invention concerne également une aube ainsi définie, dans laquelle les éléments perturbateurs sont des barres à section cylindrique de diamètre de l'ordre de 1mm.

L'invention concerne également un moteur d'aéronef comprenant au moins une aube ainsi définie.

### BRÈVE DESCRIPTION DES DESSINS

- La figure 1 est un schéma de principe d'un turboréacteur double flux en coupe longitudinale ;
- La figure 2 est une vue de côté d'une aube directrice selon l'invention ;
- La figure 3 est une vue en coupe montrant le profil aérodynamique de l'aube directrice selon l'invention ;
- La figure 4 est une représentation schématique illustrant une problématique d'effondrement lors de la fabrication additive d'une pièce ;
- La figure 5 est une vue dessus d'une aube directrice fabriquée au sens couché sur un plateau d'une machine dédiée conformément à l'invention ;
- La figure 6 est une vue en coupe d'une aube directrice fabriquée au sens couché sur un plateau d'une machine dédiée conformément à l'invention ;
- La figure 7 représente le fonctionnement de l'échangeur thermique constitué par l'aube directrice selon l'invention ;
- La figure 8 est une illustration en perspective d'un agencement d'éléments perturbateurs conformément à l'invention ;
- La figure 9 est une vue locale d'un passage de fluide illustrant un critère de distribution de points de raccord conformément à l'invention ;
- La figure 10 est en vue locale d'un passage de fluide illustrant un critère de distance de points de raccord conformément à l'invention.

### EXPOSÉ DÉTAILLÉ DE MODES DE RÉALISATION PARTICULIERS

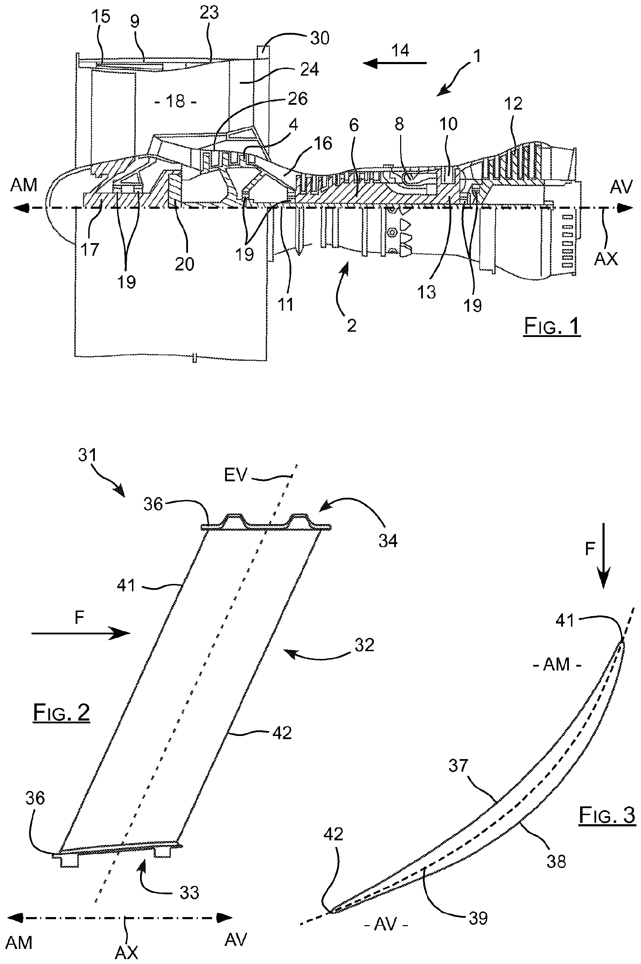

En référence à la figure 1, il est représenté un turboréacteur 1 à double flux et à double corps d'axe longitudinal de révolution AX, présentant un taux de dilution élevé. Le turboréacteur 1 comporte de façon classique un générateur de gaz 2 comprenant une chambre de combustion 8 de part et d'autre de laquelle sont agencés un compresseur basse pression 4 et une turbine basse pression 12, ce générateur de gaz 2 comprenant un compresseur haute pression 6, et une turbine haute pression 10. Par la suite, les termes « avant » et « arrière » sont considérés selon une direction 14 opposée à la direction d'écoulement principale des gaz au sein du turboréacteur, cette direction 14 étant parallèle à l'axe AX de celle-ci. En revanche, les termes « amont » AM et « aval » AV sont considérés selon la direction d'écoulement principale des gaz au sein du turboréacteur.

Le compresseur basse pression 4 et la turbine basse pression 12 forment un corps basse pression, et sont reliés l'un à l'autre par un arbre basse pression 11 centré sur l'axe AX. De même, le compresseur haute pression 6 et la turbine haute pression 10 forment un corps haute pression, et sont reliés l'un à l'autre par un arbre haute pression 13 centré sur l'axe AX et agencé autour de l'arbre basse pression 11. Les arbres sont supportés par des paliers de roulement 19, qui sont lubrifiés en étant agencés dans des enceintes baignée de fluide hydraulique. Il en est de même pour le moyeu de soufflante 17, également supporté par des paliers de roulement 19.

Le turboréacteur 1 comporte par ailleurs, à l'avant du générateur de gaz 2 et du compresseur basse pression 4, une soufflante 15 unique qui est ici agencée directement à l'arrière d'un cône d'entrée d'air du moteur. La soufflante 15 est rotative selon l'axe AX, et entourée d'un carter de soufflante 9. Sur la figure 1, elle n'est pas entraînée directement par l'arbre basse pression 11, mais seulement entraînée indirectement par cet arbre via un réducteur 20, ce qui lui permet de tourner avec une vitesse plus lente. Néanmoins, une solution à entraînement direct de la soufflante 15, par l'arbre basse pression 11, entre dans le cadre de l'invention. Il est à noter qu'un entraînement direct de la soufflante peut être retenu sans sortir du cadre de l'invention.

En outre, le turboréacteur 1 définit une veine primaire 16 destinée à être traversée par un flux primaire, ainsi qu'une veine secondaire 18 destinée à être traversée par un flux secondaire situé radialement vers l'extérieur par rapport au flux primaire, le flux de la soufflante étant donc divisé. Comme cela est connu de l'homme du métier, la veine secondaire 18 est délimitée radialement vers l'extérieur, par rapport à l'axe de rotation de la turbomachine, en partie par une virole extérieure 23 préférentiellement métallique, prolongeant vers l'arrière le carter de soufflante 9.

Bien que cela n'ait pas été représenté, le turboréacteur 1 est équipé d'un ensemble d'équipements, par exemple du type pompe à carburant, pompe hydraulique, alternateur, démarreur, actionneur stator à calage variable (VSV), actionneur de vanne de décharge, ou encore générateur électrique de puissance. Il s'agit notamment d'un équipement pour la lubrification du réducteur 20. Ces équipements sont entraînés par une boîte d'accessoires ou AGB (non représentée), qui est également lubrifiée.

En aval de la soufflante 15, dans la veine secondaire 18, il est prévu une couronne d'aubes directrices qui sont ici des aubes directrices de sortie 31 (ou OGV, de l'anglais « Outlet Guide Vane »). Ces aubes statoriques 31 relient la virole extérieure 23 à un carter 26 entourant le compresseur basse pression 4. Elles sont espacées circonférentiellement les unes des autres, et permettent de redresser le flux secondaire après son passage à travers la soufflante 15. De plus, ces aubes 31 peuvent également remplir une fonction structurale, comme c'est le cas dans des exemples de réalisation qui sont présentement décrits. Elles assurent le transfert des efforts provenant du réducteur et des paliers de roulement 19 des arbres moteur et du moyeu de soufflante, vers la virole extérieure 23. Ensuite, ces efforts peuvent transiter par une attache moteur 30 fixée sur la virole 23 et reliant le turboréacteur à un mât d'accrochage (non représenté) de l'aéronef.

Enfin, les aubes directrices de sortie 31 assurent, dans les exemples de réalisation qui sont présentement décrits, une troisième fonction d'échangeur thermique entre le flux d'air secondaire traversant la couronne d'aubes, et du fluide hydraulique circulant à l'intérieur de ces aubes 31. Le fluide hydraulique destiné à être refroidi par les aubes directrices de sorties 31 est celui servant à la lubrification des paliers de roulement 19, et/ou des équipements du turboréacteur, et/ou du boîtier d'accessoires, et/ou du réducteur 20. Ces aubes 31 font ainsi partie du/des circuits fluidiques dans lesquels le fluide hydraulique est mis en circulation pour successivement lubrifier le/les éléments associés, puis pour être refroidi.

Il va être décrit l'une des aubes directrices de sortie 31, mais il est noté que l'invention telle qu'elle va être décrite peut s'appliquer à toutes les aubes 31 de la couronne statorique centrée sur l'axe AX, ou bien seulement à certaines de ces aubes.

Selon l'invention, l'aube directrice 31 qui apparaît sur la figure 2 est une pièce métallique incluant en particulier une partie aérodynamique 32, également appelée pale, destinée à être exposé au flux secondaire repéré par F. Cette partie aérodynamique 32 est prolongée de part et d'autre par un pied 33 et une tête 34 qui assurent la fixation de l'aube 31 au carter 26 et à la virole extérieure 23. L'aube 31 comprend en outre au niveau de son pied et de sa tête, des plateformes 36 servant à reconstituer une portion de la veine secondaire une fois cette aube installée sur la turbomachine.

Conçue en fonction de la direction d'arrivée du flux secondaire F pour le redresser, l'aube 31 s'étend selon un profil cambré depuis le pied 33 jusqu'à la tête 34 se vrillant autour d'un axe dit d'envergure EV. Cet axe d'envergure EV peut être perpendiculaire à un axe AX ou inclinée comme représenté sur la figure 2.

Cette partie aérodynamique 32 comporte une paroi d'intrados 37 et une paroi d'extrados 38 qui sont espacées l'une de l'autre de part et d'autre d'une ligne médiane du profil de l'aube, appelé également squelette repéré par 39 sur la figure 3. Ces parois d'intrados 37 et d'extrados 38 sont réunies en une première extrémité du squelette 39 par un bord d'attaque 41 et en une seconde extrémité du squelette 39 par un bord de fuite 42. D'une manière générale, le squelette 39 peut être scindé en une moitié amont AM et une moitié aval AV séparées l'une de l'autre par une ligne médiane du squelette située à mi-distance entre le bord d'attaque et le bord de fuite.

Cette aube directrice 31 est une pièce métallique formée d'un seul tenant par fabrication additive sur lit de poudre en étant formé d'une pluralité de couches de matière successives et parallèles, de manière non limitative en alliage d'aluminium. La fabrication additive sur lit de poudre désigne l'ajout de matière couche par couche, sur un plateau de fabrication d'une machine dédiée, pour former un objet physique à partir d'un modèle numérique. Dans le cas d'une pièce métallique comme l'aube directrice 31, on recourt au procédé de fusion laser sur lit de poudre qui consiste à faire fondre une partie d'une fine couche de poudre étalée par un racleur à l'aide d'un laser à chaque passe.

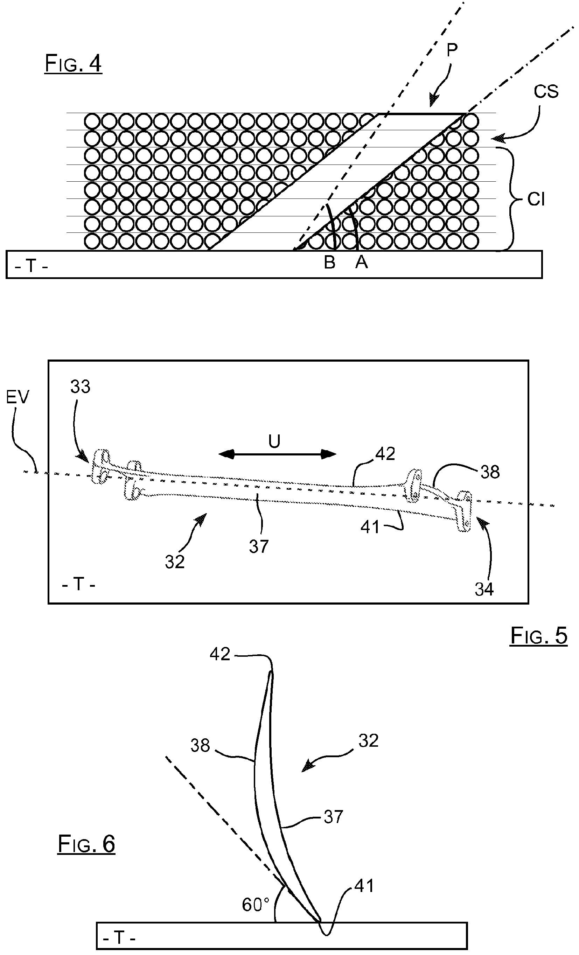

La poudre utilisée en fusion laser n'est pas autoportante. Comme visible sur la figure 4, lors de la fabrication d'une pièce P, la poudre non fusionnée de couches inférieures repérées par CI, c'est-à-dire qui n'est pas balayée par le laser, n'est pas capable de soutenir la poudre fusionnée d'une couche supérieure consécutive CS en deçà d'un angle de dépouille minimum A entre la pièce P et le plateau de fabrication T.

Pour résoudre cette problématique, il est connu de former tout en fabriquant la pièce, des supportages qui soutiennent chaque région ayant un angle de dépouille inférieur à un angle minimum prédéfini A, pour éviter un effondrement local. La pièce et les supportages sont solidaires, fabriqués en même temps et faits du même matériau. Une fois la fabrication additive achevée, les supportages constituent de la matière « morte », autrement dit non fonctionnelle, et doivent ainsi être retirés par usinage.

Dans l'exemple des figures, il est défini l'angle de dépouille minimum A à 30° par rapport au plateau T, et un angle de rendu surfacique optimal B de 60° par rapport au plateau en deçà duquel des aspérités de surfaces sont constatées, notamment en bords de pièce.

Attendu que les parois d'extrados et d'intrados 38 et 37 présentent un profil gauche donc difficilement usinable, alors qu'elles doivent être exemptes de défauts pour assurer de bonnes propriétés d'écoulement, il s'agit d'orienter l'aube 31 lors de sa fabrication de sorte à ce que ces parois ne nécessitent pas d'être soutenues par des supports. A cet effet, l'invention prévoit une orientation préférentielle de l'aube directrice 31 durant sa fabrication par rapport au plateau de fabrication T. Suivant cette orientation dite « au sens couché », l'aube 31 est fabriquée avec l'axe EV parallèle au plateau T en débutant par le bord d'attaque 41, du fait qu'il est plus épais que le bord de fuite 42, avec l'extrados formant avec le plateau T un angle de 60° au niveau de ce bord d'attaque, comme visible sur la figure 6. Avec cet agencement, les couches successives de poudre fusionnée constituant cette aube 31 s'étendent suivant l'axe EV, et l'angle formé entre l'extrados 38 et le plateau T diminue continûment à mesure des couches de poudre empilées jusqu'à former un angle de 0° au niveau du bord de fuite. Préférentiellement, l'axe d'envergure EV est orienté avec un angle d'environ 2 ou 3° par rapport à la direction de balayage du racleur repéré par U sur la figure 5 afin d'éviter son blocage, voire un arrachement de couches inférieures dans le cas le plus sévère.

Cette aube directrice 31 assure une fonction d'échangeur thermique entre le flux d'air F qui parcourt sa partie aérodynamique 32, et un fluide hydraulique qui circule en son sein.

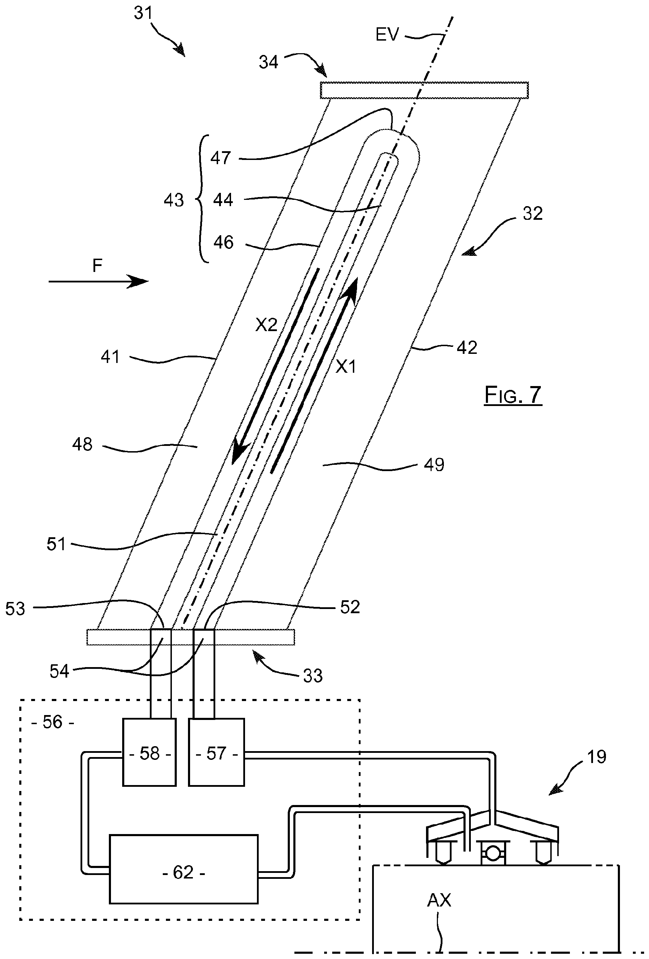

Comme visible sur la figure 7, la partie aérodynamique 32 comporte un passage interne d'écoulement de fluide 43 délimité par les parois d'intrados et d'extrados 37 et 38, et plus précisément par une face intérieure de la paroi d'intrados et une face intérieure de la face d'extrados qui sont en regard l'une de l'autre et en contact avec le fluide hydraulique. Ce passage interne 43 comprend un premier et un second canal 44 et 46 sensiblement parallèles à l'axe EV, décalés l'un de l'autre suivant une direction orthogonale à l'axe EV, et reliés ensemble par un branchement coudé 47. En outre, les parois d'intrados et d'extrados 37 et 38 sont raccordées au niveau d'une zone pleine amont 48 à proximité du bord d'attaque 41, une zone pleine aval 49 à proximité du bord de fuite 42, et au niveau d'une zone pleine centrale 51. Les zones pleines amont et aval 48 et 49 s'étendent depuis le pied 33 jusqu'à la tête 34, tandis que la zone pleine centrale 51 s'étend depuis le pied jusqu'au branchement coudé 47 en étant agencée le long de l'axe d'envergure EV entre les premier et second canaux internes pour les isoler l'un de l'autre hors du branchement coudé 47.

Le premier canal 44 s'étend depuis une embouchure d'alimentation en fluide 52, formée au niveau de la jonction entre la partie aérodynamique 32 et le pied 33, jusqu'au branchement coudé 47 en définissant une première direction de propagation de fluide X1 en son sein qui est sensiblement parallèle à l'axe d'envergure EV. Le second canal 46 s'étend quant à lui depuis le branchement coudé 47 jusqu'à une embouchure d'éjection en fluide 53 distincte de l'embouchure d'alimentation 52 et formée de la même manière au niveau de l'interface entre la partie aérodynamique 32 et le pied 33. Ce second canal 46 définit une seconde direction de propagation de fluide X2 en son sein qui est sensiblement parallèle à l'axe d'envergure EV.

Les embouchures d'alimentation et d'éjection 52 et 53 sont chacune prolongées par un volume évidé 54 dans le pied 33 formant un raccord fluidique entre le passage interne 43 et un circuit hydraulique de la turbomachine repéré par l'élément 56 sur la figure 7. Ce circuit hydraulique 56 comprend notamment une pompe d'injection 57 et une pompe de récupération 58, permettant d'appliquer au fluide hydraulique le sens de circulation désiré selon X1 et X2 respectivement au sein des premier et second canaux 44 et 46. L'introduction du fluide hydraulique dans le passage interne 43 s'effectue au niveau de l'embouchure d'alimentation 52 en traversant le raccord 54 associé, et son extraction s'effectue par l'embouchure d'éjection 53 après avoir transité le long du premier canal et du second canal en passant de l'un à l'autre au travers du branchement coudé 47.

En pratique, durant la vie en fonctionnement de la turbomachine équipée de l'aube directrice 31, le fluide hydraulique admis sous l'action de la pompe d'injection 57 dans le passage interne 43, présente une température élevée attendu qu'il vient d'être utilisé à des fins de lubrification d'un engrenage ou, comme ici repéré un des palier de roulement 19 qui guide en rotation un arbre d'axe AX. A mesure que ce fluide progresse dans le passage interne depuis l'embouchure d'alimentation 52 jusqu'à l'embouchure d'éjection 53, il est progressivement refroidi par les parois d'intrados et d'extrados qui constituent des surfaces d'échange thermique en étant exposées au flux d'air F froid. Une fois refroidi, ce fluide est réinjecté sous l'action de la pompe de récupération 58 dans le circuit hydraulique 56, et plus spécifiquement dans un réservoir 62 à partir duquel il sera à nouveau prélevé à des fins de lubrification.

Dans l'exemple de la figure, le premier canal 44 se situe du côté du bord de fuite 42, tandis que le second canal 46 se situe du côté du bord d'attaque 41. Cet agencement est défini pour optimiser au mieux les échanges thermiques, mais il est à noter que l'arrangement inverse peut être retenu sans sortir du cadre de l'invention.

Afin d'augmenter le coefficient d'échange thermique, il est prévu de placer une pluralité d'éléments perturbateurs d'écoulement qui relient chacun les parois d'intrados et d'extrados 37 et 38 au sein des deux premier et second canaux 44 et 46. En plus d'accroitre l'efficacité de l'échange thermique en augmentant à la fois la surface d'échange et ajoutant une composante d'échange convectif, ces éléments perturbateurs assurent une fonction de raidisseur en accroissant chacun la cohésion entre les parois d'intrados et d'extrados. Par ailleurs, il est noté que le branchement coudé 47 défini un espace préférentiellement exempt d'élément perturbateur dans le cas de l'aube directrice 31.

L'idée à la base de l'invention est d'utiliser avantageusement la capacité à produire facilement des formes très complexes par fabrication additive afin que le fluide circulant dans le passage interne 43 soit perturbé dans sa totalité. L'aube directrice 31 selon l'invention requiert ainsi que les éléments perturbateurs soient agencés de manière désordonnée en formant un ensemble indivisible en motifs répétés le long du premier et du second canal 44 et 46, pour éviter tout chemin de propagation de fluide qui ne rencontrerait pas d'élément perturbateur.

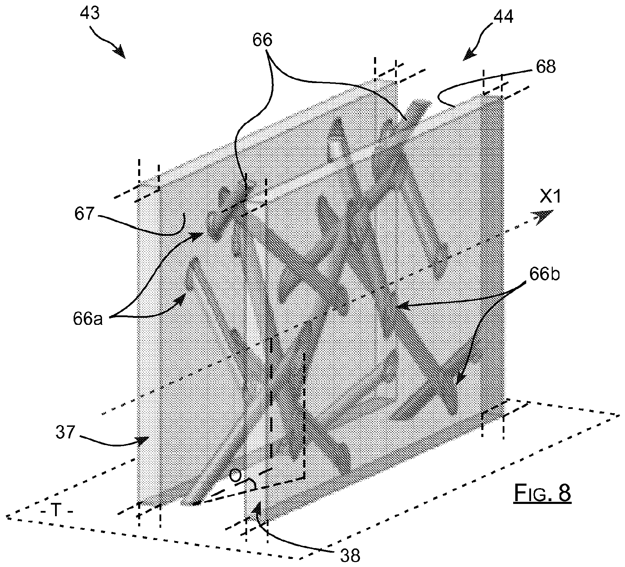

Comme visible sur la figure 8, le premier canal 44 comprend une succession d'éléments perturbateurs 66 irrégulièrement espacés les uns des autres et s'étendant en travers de celui-ci sur toute son étendue, autrement dit distribués le long de l'écoulement fluidique X1. Il est à noter que la description des éléments perturbateurs 66 est réalisée pour le premier canal 44, attendu que les éléments perturbateurs 66 dans le second canal 46 suivent un agencement et une morphologie similaires.

Ces éléments perturbateurs 66 comprennent chacun une première et une seconde extrémité 66a et 66b formant respectivement un point de raccord en face intérieure de la paroi d'intrados repérée par 67, et en face intérieure de la paroi d'extrados repérée par 68. L'orientation des éléments perturbateurs n'est pas constante le long du canal en s'étendant de manière oblique par rapport à l'axe EV. De plus, la distribution des points raccord 66a et 66b ne suit pas un alignement ou un ordre particulier en formant un nuage de point sans aucun motif discernable dans une vue d'ensemble en face intérieure de la paroi d'intrados 67 ou d'extrados 68. Plus spécifiquement, les points raccord 66a et 66b ne sont pas tous confondus avec une ligne, notamment une ligne parallèle à la direction X1.

Avec cet arrangement, il est à comprendre que l'intensité de la turbulence est augmentée avec, vu du fluide, des lignes de courant qui se propagent de manière tridimensionnelle au sein du premier et du second canal 44 et 46. En comparaison, un agencement ordonné d'éléments perturbateurs, notamment orientés perpendiculairement à la direction générale fluidique selon l'état de la technique, génère une perturbation restant essentiellement bidimensionnelle. Il est entendu que le fluide, quel que soit son cheminement en contournant les éléments perturbateurs formant des obstacles, conserve une composante suivant la direction fluidique X1 ou X2. Autrement dit, même si le fluide est perturbé localement de manière différente selon le cheminement suivi, il conserve une direction générale de propagation définie par le passage fluidique 43, ici X1 et X2.

Cet agencement d'éléments perturbateurs 66, en plus d'augmenter l'échange thermique par turbulence, assure une tenue mécanique améliorée. En effet, la variété d'orientations différentes des éléments perturbateurs 66 permet un meilleur transfert d'efforts entre les parois d'intrados et d'extrados 37 et 38, attendu que pour une sollicitation ayant une direction, il existe au moins un élément perturbateur dont l'orientation se rapproche le plus de cette direction, et de ce fait reprend le pic d'effort.

Dans le cadre d'une fabrication dite « au sens couché » de l'aube 31, présentant le passage interne de fluide 43 de la figure 7 avec les directions générales de propagation de fluide X1 et X2 s'étendant parallèlement à l'axe EV, étant donné que les éléments perturbateurs 66 sont fabriqués en même temps que l'aube, les premiers points de raccord 66a ne sont pas tous inclus dans un même plan parallèle au plateau T. De la même manière, les extrémités 66b formant point de raccord avec la paroi d'extrados 37 ne sont pas toutes fabriquées dans un même plan parallèle au plateau T. Autrement dit, les premiers points de raccords 66a, et de la même manière les seconds points de raccords 66b, ne sont pas fabriqués de manière simultanée au niveau d'une même couche de poudre, ou plus précisément d'une même succession de couches de poudre, constituant l'aube directrice 31. Cet aspect permet de s'affranchir d'une accumulation de contraintes résiduelles dû à une action prolongée du laser, qui dans le cas contraire, i.e. dans le cas d'un agencement ordonné et un alignement suivant une ligne de jonction perturbateur-parois des points de raccord 66a et/ou 66b, serait susceptible de déformer la matière au niveau d'une telle ligne et se répercuter en formant des ressauts sur la surface extérieur des parois d'intrados et d'extrados. A cet effet, l'agencement et l'orientation des éléments perturbateurs 66 au sein de l'aube directrice 31 est particulièrement compatible et bien adaptée au procédé de fusion laser métallique, et plus largement au procédé de fabrication additive sur lit de poudre, en ce qu'il est permis une fabrication avec les directions fluidiques X1 et X2 parallèles au plateau T.

Durant la phase de conception, autrement dit de l'établissement du modèle numérique sur la base duquel l'aube directrice 31 est fabriquée, les éléments perturbateurs 66 sont générés aléatoirement tout en respectant différents critères de paramétrage d'écoulement, de performance d'échange et de fabricabilité.

Attendu que le fluide hydraulique va se propager à l'intérieur du passage interne 43, il est inenvisageable que ces éléments perturbateurs 66 puissent s'effondrer en formant des amas de grains partiellement fusionnés susceptibles de se détacher et polluer le circuit hydraulique 56. De la même manière, l'introduction de supports à l'intérieur du passage interne 43 pour soutenir ces éléments perturbateurs 66 est exclue car, ne pouvant pas être ôtés par usinage, ils entacheraient la propagation du fluide hydraulique. A cet effet, les éléments perturbateurs 66 doivent être érigés depuis la face intérieure d'intrados ou d'extrados 67 ou 68, en fonction du point de raccord 66a ou 66b à partir duquel ils débutent chacun leur fabrication, en formant un angle supérieur à 30° par rapport au plateau T, ou encore par rapport à un plan parallèle aux couches successives constituant l'aube 31 qui sont formées parallèlement au plateau T. En outre, ces éléments perturbateurs 66 sont typiquement des barres à section cylindrique, autrement dit des cylindres pleins, de diamètre préférentiellement constant de l'ordre de 1mm. Ce diamètre correspond à une valeur minimum admissible pour laquelle l'angle formé avec le plateau n'entraîne pas de problème de fabricabilité en deçà de 70°. Autrement dit, les éléments perturbateurs 66 selon l'invention doivent respecter un angle avec le plateau, ou de la même manière avec un plan parallèle aux couches successives constituant l'aube, d'une valeur d'angle comprise entre 30° et 70°.

Les éléments perturbateurs 66 doivent également respecter une contrainte de proximité, en veillant à ne pas produire de section de passage de fluide trop petite, générant un mauvais écoulement, ou à l'opposé trop grande conduisant à une perte d'efficacité de l'échange thermique. L'invention prévoit pour l'aube directrice 31 que la distance entre deux éléments perturbateurs mesurée aux points le plus proche doit être comprise typiquement entre 2 et 10mm.

Enfin, pour assurer une perturbation significative du fluide traversant le passage interne 43, les éléments perturbateurs 66 selon l'invention doivent être orientés par rapport à la direction de propagation de ce fluide en formant un angle O dit d'orientation d'une valeur comprise entre 70° et 110°, et plus généralement comprise entre 60 et 120°. Il est entendu que même si la direction de propagation du fluide évolue le long du passage interne 43 du fait du contournement des éléments perturbateurs, il est ici fait référence à la direction de propagation générale du fluide suivant X1 dans le premier canal et suivant X2 dans le second canal 46.

De préférence, les éléments perturbateurs 66 sont générés et agencés de manière automatique via un outil numérique reposant sur un algorithme. Une fois que la partie aérodynamique 32 et le passage interne 43 en son sein sont modélisés, ainsi que l'orientation de fabrication par rapport au plateau de fabrication T est définie, un tel algorithme selon l'invention consiste successivement à :
a) établir en premier lieu un nuage de points aléatoires dans un plan, et préférentiellement sur une surface médiane intrados-extrados fictive qui suit le squelette 39, tout en veillant à ce qu'ils respectent la contrainte de proximité fixée entre deux éléments perturbateurs, ici comprise en 2 et 10mm ;
b) générer les éléments perturbateurs en formant des cylindres pleins passant chacun par un point distinct ainsi formé en a) et respectant le diamètre prédéfini, ici d'une valeur de 1mm ;
c) varier aléatoirement l'orientation des cylindres en respectant les donnée d'entrée de valeur d'angle de fabricabilité, ici comprises entre 30° et 70°, et d'orientation par rapport à la direction de propagation du fluide O , ici comprise entre 70° et 110°;
d) évaluer les distances entre les cylindres hors du plan ou de la surface médiane intrados/extrados et pris deux à deux ;
e) optimiser les distances mesurée en d) entre les cylindres en ajustant leur orientation tout en respectant toujours les valeurs d'angles issues de c) ;
f) affiner au besoin les positions relatives des cylindres en faisant varier les positions des points définis en a).

Il est à noter que même s'il simplifie la mise en oeuvre des éléments perturbateurs 66, l'invention pourrait prévoir de ne pas utiliser d'outil générant automatiquement ces éléments perturbateurs 66 sur la base d'un tel algorithme.

En pratique, l'aube selon l'invention comprend un passage interne d'écoulement de fluide dans lequel des éléments perturbateurs 66 sont orientés et espacés irrégulièrement les uns des autres selon des paramètres variés dans un intervalle choisi et optimisé, ce qui garantit un échange thermique maximum.

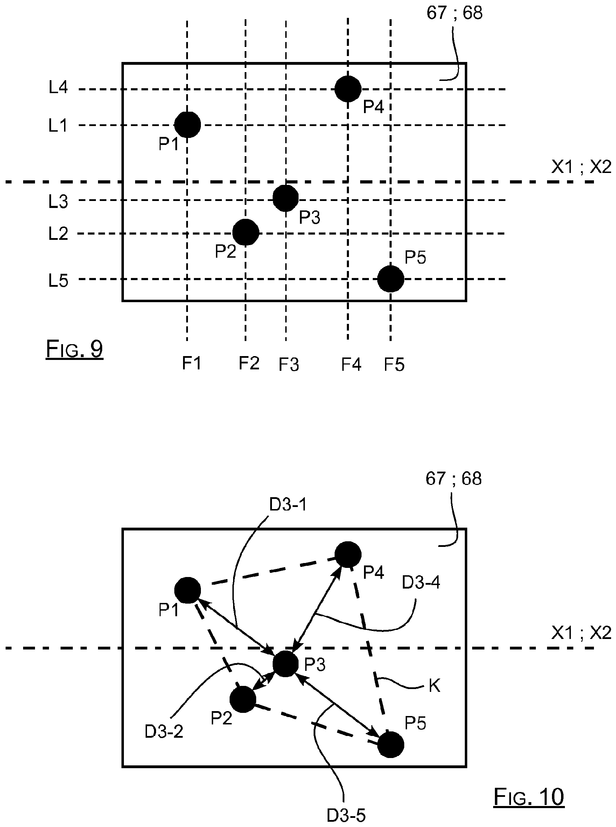

A cet égard, dans une vue depuis l'intérieur du passage interne et selon une direction localement sensiblement orthogonale à / et orientée vers la face intérieure d'intrados ou d'extrados 67 et 68 comme illustré à la figure 9 (correspondant également à une vue selon une direction orthogonale à la direction de propagation du fluide X1, X2), il s'agit idéalement que tous les points de raccord repérés ici par P1, P2, P3, P4 et P5 soient chacun agencés à l'intersection entre :
- une ligne fictive primaire distincte L1, L2, L3, L4 et L5 s'étendant parallèlement à la direction de propagation du fluide X1, X2 et,
- une ligne fictive secondaire distincte F1, F2, F3, F4 et F5 perpendiculaire à la ligne fictive primaire associée L1, L2, L3, L4 et L5.

Autrement dit, il s'agit idéalement que chacune des extrémités des éléments perturbateurs 66 soient raccordées à la paroi de manière à ne pas former localement de chemin libre de propagation.

Dans le cas de l'aube directrice 31 avec les premiers et second canaux 44 et 46 s'étendant parallèlement à l'axe d'envergure EV, il s'agit idéalement que tous les points de raccord formés sur une face intérieure de paroi dans une vue locale, soient chacun agencés à l'intersection entre une ligne fictive primaire parallèle à l'axe EV et une ligne fictive secondaire distincte perpendiculaire à la ligne fictive primaire.

La définition de local correspond ici à un secteur borné au-delà duquel le passage interne est suffisamment étendu pour qu'au moins deux points de raccord interceptent obligatoirement une même ligne fictive. Comme illustré sur la figure 10 reprenant la même distribution de point que sur la figure 9, cet aspect se matérialise notamment en ce que pour tout point de raccord P3 quelconque présentant autour de lui un nombre N supérieur à 3 de points de raccord, ici P1, P2, P4 et P5, formés sur la même face intérieure de paroi et formant une ligne fermée K délimitant intérieurement un espace dans lequel se trouve ledit point de raccord quelconque P3, la distance D3-1, D3-2, D3-4, D3-5 entre ce dernier et chacun desdits N points est différente pour au moins trois d'entre eux, et de préférence pour chacun d'entre eux.

Dans l'exemple des figures 5 et 6, l'aube directrice 31 est fabriquée « au sens couché » avec son axe d'envergure EV parallèle au plateau T. Mais il est à noter que l'invention n'est pas limitée à ce sens de fabrication et pourrait par exemple prévoir une alternative dite « au sens debout », avec l'aube 31 fabriquée en appui sur une de ses plateformes, i.e. en débutant la fabrication sur le plateau à partir d'une plateforme. Contrairement à la fabrication « au sens couché », visant notamment à maximiser la longueur fabricable tout en réduisant la hauteur de fabrication pour optimiser le temps de fabrication, cette alternative privilégie la réduction des supports sur le profil aérodynamique pour minimiser les opérations de finition. De plus, cette alternative « au sens debout » permet d'augmenter le nombre d'aubes 31 fabricables en simultanée sur le même plateau T.

De la même manière, il est à noter que la distribution des éléments perturbateurs 66 selon l'invention n'est pas limitée en ce qu'ils suivent l'axe d'envergure EV de l'aube, attendu que le passage interne 43 peut présenter une morphologie différente à celle illustrée sur la figure 7, comme par exemple serpentine, sans sortir du cadre de l'invention. Concrètement, la formation des éléments perturbateurs 66 selon l'invention est applicable quel que soit le sens de fabrication de la partie aérodynamique 32, et plus précisément la ou les orientations du passage fluidique 43 au sein de cette dernière, dès lors les valeurs d'angle de dépouille minimum A et d'orientation O prédéfinis sont respectés.

Il s'agit de préciser cependant que la valeur de cet angle de dépouille minimum A n'est pas nécessairement égale à 30°, attendu qu'elle dépend notamment de la nature de la poudre utilisée et de la machine utilisée. A cet égard, l'invention pourrait prévoir que les éléments perturbateurs forment un angle avec le plateau T d'une valeur différente pour respecter une nouvelle valeur d'angle A induite par un changement de matériau et/ou de procédé de fabrication additive, comme par exemple en utilisant un alliage de titane.

Il est d'ailleurs à noter que la distance entre deux éléments perturbateurs ainsi que la valeur d'angle d'orientation O sont modifiables sans sortir du cadre de l'invention, attendu que ces paramètres dépendent de la nature du fluide circulant dans le passage interne de l'aube, et plus spécifiquement de sa viscosité.

En ce qui concerne les éléments perturbateurs 66, l'invention ne se limite pas à des cylindres pleins, et permet l'utilisation de forme diverses comme par exemple à section ovoïde, rectangulaire, triangulaire, parallélépipédique, conique, prismatique, ou toute autre forme, dès lors qu'un échange thermique s'effectue entre le fluide qui épouse leur contour et le flux parcourant la surface extérieure des parois d'extrados et d'intrados. De la même manière leur diamètre peut être modifié en fonction du nombre d'éléments perturbateurs 66 souhaité au sein du passage interne et des contraintes de conduction. L'invention pourrait notamment prévoir que le diamètre excède 1mm, ce qui les autorise notamment à former un angle avec le plateau T qui dépasse 70°.

D'une manière générale, l'aube selon l'invention comprend un passage interne d'écoulement de fluide 43 dans lequel des éléments perturbateurs 66 sont prévus et dont leur agencement permet :
- d'augmenter le potentiel d'échange thermique en renforçant la turbulence du fluide hydraulique,
- d'augmenter la tenue mécanique de la partie aérodynamique en reprenant un large spectre de directions de sollicitations, et
- de limiter l'incidence du procédé de fabrication additive sur lit de poudre sur la santé matière de l'aube, et notamment au niveau de la surface extérieure des parois d'intrados et d'extrados, cette particularité étant révélée lorsque tout ou partie d'un canal du passage interne de fluide s'étend parallèlement au plateau T durant la fabrication de la partie aérodynamique. En effet, la configuration géométrique des éléments perturbateurs permet de limiter le temps de lasage associé à la formation d'une couche constituante de la partie aérodynamique, attendu que tous ces éléments ne sont pas érigés depuis/achevés sur la face intérieure d'une paroi d'intrados ou d'extrados au niveau de la même couche ou succession de couches de poudre. En d'autres termes, étant donné qu'un tel agencement d'éléments perturbateurs 66 ne pénalisera pas la résistance de l'aube pour une orientation donnée, l'invention permet une plus grande souplesse de conception du passage interne fluidique 43 et d'orientation de l'aube durant sa fabrication.

Dans l'exemple de la figure 8, l'agencement des éléments perturbateurs 66 est particulièrement performant pour augmenter la turbulence du fluide, mais il est à noter que l'invention pourrait prévoir une distribution « dissymétrique » avec seuls les premiers ou les seconds points de raccord étant désordonnés tandis que les autres étant alignés ou formant un motif répétable au besoin. Cette distribution « asymétriques » pourrait être privilégiée en fonction du cas d'espèce, pour satisfaire notamment une autre condition de performance.

Enfin, l'agencement particulier des éléments perturbateurs 66 selon l'invention a été expliqué ici pour le cas où ils équipent un passage interne 43 d'une aube directrice 31 dans lequel circule un fluide hydraulique nécessitant d'être refroidi. Concrètement, cette disposition des éléments perturbateurs 66 selon l'invention trouve son application dans le domaine général des aubes fabriquées d'un seul tenant par fabrication additive sur lit de poudre en comprenant un passage interne d'écoulement en fluide dans lequel ces éléments perturbateurs maximisent la surface mouillée et le phénomène de convection. A titre d'exemple, l'invention pourrait prévoir une aube de turbine placée en sortie de chambre de combustion 8 et dont le passage interne assure cette fois une fonction de refroidissement des paroi d'intrados et d'extrados avec un flux d'air frais, prélevé en amont de la combustion, qui chemine le long de ce passage interne en étant perturbé par un ensemble d'éléments perturbateurs 66 ainsi définis.

## Revendications

1. Aube de turbomachine d'aéronef comprenant une partie aérodynamique (32) s'étendant suivant un axe d'envergure (EV) et fabriquée d'un seul tenant par fabrication additive, ladite partie aérodynamique comprenant une paroi d'intrados (37) et une paroi d'extrados (38) comprenant respectivement une face intérieure d'intrados (67) et une face intérieure d'extrados (68), ces faces intérieures d'intrados et d'extrados (67, 68) étant en vis-à-vis l'une l'autre et délimitant conjointement un passage interne de fluide (43) comprenant au moins un canal (44; 46) définissant une direction générale de propagation de fluide (X1 ; X2) en son sein, ce canal étant traversé par une pluralité d'éléments perturbateurs de flux (66) reliant les parois d'intrados et d'extrados (37, 38) en présentant chacun un premier point de raccord (66a) sur la face intérieure d'intrados (67), et un second point de raccord (66b) sur la face intérieure d'extrados (68),
**caractérisée en ce que** les éléments perturbateurs s'étendent par rapport à la direction générale de propagation de fluide (X1 ; X2) en formant un angle variable d'un élément perturbateur à un autre, et **en ce que** les éléments perturbateurs (66) sont irrégulièrement espacés les uns des autres de sorte que les premiers points de raccord (66a) sont agencés de manière désordonnée sur la face intérieure d'intrados (67), et/ou **en ce que** les seconds points de raccord (66b) sont agencés de manière désordonnée sur la face intérieure d'extrados (68).

2. Aube selon la revendication 1, **caractérisée en ce que** le passage interne de fluide (43) comprend un premier et un second canal (44, 46) définissant chacun une direction de propagation de fluide (X1, X2) sensiblement parallèle à l'axe d'envergure (EV), ces premier et second canaux (44, 46) étant traversés par les éléments perturbateurs (66) dont les premiers et second points de raccord (66a, 66b) ne suivent pas un alignement particulier le long de la direction de propagation de fluide (X1, X2).

3. Aube selon l'une des revendications précédentes, **caractérisée en ce que** pour tout point de raccord (66a, 66b) quelconque parmi les premiers points de raccord (66a) et/ou les seconds points de raccords agencés de manière désordonnée, ce point de raccord présente autour de lui un nombre N de points de raccord formant une ligne fermée, délimitant intérieurement un espace dans lequel se trouve le seul point de raccord quelconque, la distance entre ce dernier est chacun desdits N points est différente pour au moins trois d'entre eux, et de préférence pour chacun d'entre eux.

4. Aube selon l'une des revendications précédentes, **caractérisée en ce que**,
- dans une vue depuis l'intérieur du passage de fluide (43), selon une direction localement sensiblement orthogonale à et orientée vers la face intérieure d'intrados (67), tous les premiers points de raccord (66a) de celle-ci sont chacun agencés à l'intersection entre une ligne fictive primaire (L1, L2, L3, L4, L5) s'étendant parallèlement à la direction de propagation du fluide (X1, X2), et une ligne fictive secondaire (F1, F2, F3, F4, F5) perpendiculaire à la ligne fictive primaire, l'ensemble des premières lignes fictives étant toutes distinctes les unes des autres et l'ensemble des secondes lignes fictives étant toutes distinctes les unes des autres ; et/ou
- dans une vue depuis l'intérieur du passage de fluide (43), selon une direction localement sensiblement orthogonale à et orientée vers la face intérieure d'extrados (68), tous les seconds points de raccord (66b) de celle-ci sont chacun agencés à l'intersection entre une ligne fictive primaire s'étendant parallèlement à la direction de propagation du fluide (X1, X2), et une ligne fictive secondaire perpendiculaire à la lignes fictive primaire, l'ensemble des premières lignes fictives étant toutes distinctes les unes des autres et l'ensemble des secondes lignes fictives étant toutes distinctes les unes des autre.

5. Aube selon l'une quelconque des revendications précédentes, dans laquelle les éléments perturbateurs sont espacés deux à deux au point le plus proche d'une distance permettant l'écoulement du fluide, cette distance étant préférentiellement comprise entre 2 et 10 mm.

6. Aube selon l'une quelconque des revendications précédentes, dans laquelle la valeur de l'angle formé entre chaque élément perturbateur (66) et la direction de propagation de fluide (X1 ; X2) est comprise entre 70° et 110°.

7. Aube selon l'une quelconque des revendications précédentes, dans laquelle les éléments perturbateurs (66) s'étendent en formant un angle supérieur à un angle A prédéfini par rapport à un plan parallèle aux couches de fabrication successives constituant la partie aérodynamique de l'aube en deçà duquel ces éléments perturbateurs devraient être supportés durant la fabrication, l'angle A étant préférentiellement supérieur à 30°.

8. Aube selon l'une quelconque des revendications précédentes, dans laquelle les éléments perturbateurs (66) s'étendent en formant préférentiellement un angle inférieur à 70° par rapport à un plan parallèle aux couches successives constituant l'aube.

9. Aube selon l'une quelconque des revendications précédentes, dans laquelle les éléments perturbateurs sont des barres à section cylindrique de diamètre de l'ordre de 1mm.

10. Moteur d'aéronef comprenant au moins une aube selon l'une des revendications précédentes.

11. Procédé de fabrication additive d'une aube selon l'une des revendications 1 à 9, par empilement sur un plateau T de couches de matière constituant l'aube depuis son bord d'attaque, durant lequel l'axe d'envergure (EV) est parallèle au plateau T et la paroi d'extrados forme avec le plateau T un angle qui diminue à mesure des couches empilées.

## Patentansprüche

1. Turbomaschinenschaufel eines Luftfahrzeugs, umfassend einen aerodynamischen Teil (32), der sich entlang einer Spannweitenachse (EV) erstreckt, und in einem Stück durch additive Herstellung hergestellt wird, wobei der aerodynamische Teil eine Druckseitenwand (37) und eine Saugseitenwand (38) umfasst, die jeweils eine Druckseiten-Innenseite (67) und eine Saugseiten-Innenseite (68) umfassen, wobei diese Druckseiten- und Saugseiten-Innenseiten (67, 68) einander gegenüberliegend sind, und gemeinsam einen inneren Fluiddurchlass (43) begrenzen, der mindestens einen Kanal (44; 46) umfasst, der in seinem Inneren eine allgemeine Fluidausbreitungsrichtung (X1; X2) definiert, wobei dieser Kanal von einer Vielzahl von Strömungsstörelementen (66) durchquert wird, die die Druck- und Saugseitenwände (37, 38) durch Aufweisen von jeweils einem ersten Verbindungspunkt (66a) an der Druckseiten-Innenseite (67), und einem zweiten Verbindungspunkt (66b) an der Saugseiten-Innenseite (68) miteinander verbinden,
**dadurch gekennzeichnet, dass** sich die Störelemente in Bezug auf die allgemeine Fluidausbreitungsrichtung (X1; X2) durch Bilden eines variablen Winkels eines Störelements zu einem anderen erstrecken, und dadurch, dass die Störelemente (66) unregelmäßig voneinander beabstandet sind, sodass die ersten Verbindungspunkte (66a) ungeordnet auf der Druckseiten-Innenseite (67) angeordnet sind, und/oder dadurch, dass die zweiten Verbindungspunkte (66b) ungeordnet auf der Saugseiten-Innenseite (68) angeordnet sind.

2. Schaufel nach Anspruch 1, **dadurch gekennzeichnet, dass** der innere Fluiddurchlass (43) einen ersten und einen zweiten Kanal (44, 46) umfasst, die jeweils eine Fluidausbreitungsrichtung (X1, X2) im Wesentlichen parallel zur Spannweitenachse (EV) definieren, wobei dieser erste und zweite Kanal (44, 46) von den Störelementen (66) durchquert werden, deren erster und zweiter Verbindungspunkt (66a, 66b) keiner besonderen Fluchtung entlang der Fluidausbreitungsrichtung (X1, X2) folgen.

3. Schaufel nach einem der vorstehenden Ansprüche, **dadurch gekennzeichnet, dass** für jeden beliebigen Verbindungspunkt (66a, 66b) unter den ersten Verbindungspunkten (66a) und/oder den zweiten Verbindungspunkten, die ungeordnet angeordnet sind, dieser Verbindungspunkt um sich herum eine Anzahl N an Verbindungspunkten aufweist, die eine geschlossene Linie bilden, die innen einen Raum begrenzt, in dem sich der einzige beliebige Verbindungspunkt befindet, wobei der Abstand zwischen diesem letzteren und jedem der N Punkte für mindestens drei unter ihnen, und vorzugsweise für jeden unter ihnen unterschiedlich ist.

4. Schaufel nach einem der vorstehenden Ansprüche, **dadurch gekennzeichnet, dass**
- in einer Ansicht von innerhalb des Fluiddurchlasses (43) in einer Richtung lokal im Wesentlichen senkrecht zu, und zur Druckseiten-Innenseite (67) ausgerichtet, alle ersten Verbindungspunkte (66a) derselben jeweils an der Schnittstelle zwischen einer gedachten Primärlinie (L1, L2, L3, L4, L5), die sich parallel zur Fluidausbreitungsrichtung (X1, X2) erstreckt, und einer gedachten Sekundärlinie (F1, F2, F3, F4, F5) senkrecht zur gedachten Primärlinie angeordnet sind, wobei sämtliche der ersten gedachten Linien sich allesamt voneinander unterscheiden und sämtliche der zweiten gedachten Linien sich allesamt voneinander unterscheiden; und/oder
- in einer Ansicht von innerhalb des Fluiddurchlasses (43) in einer Richtung lokal im Wesentlichen senkrecht zu, und zur Saugseiten-Innenseite (68) ausgerichtet, alle zweiten Verbindungspunkte (66b) derselben jeweils an der Schnittstelle zwischen einer gedachten Primärlinie, die sich parallel zur Fluidausbreitungsrichtung (X1, X2) erstreckt, und einer gedachten Sekundärlinie senkrecht zur gedachten Primärlinie angeordnet sind, wobei sämtliche der ersten gedachten Linien sich allesamt voneinander unterscheiden und sämtliche der zweiten gedachten Linien sich allesamt voneinander unterscheiden.

5. Schaufel nach einem der vorstehenden Ansprüche, wobei die Störelemente paarweise zum nächstgelegenen Punkt um eine Entfernung beabstandet sind, die die freie Strömung des Fluids erlaubt, wobei diese Entfernung vorzugsweise zwischen 2 und 10 mm liegt.

6. Schaufel nach einem der vorstehenden Ansprüche, wobei der Wert des zwischen jedem Störelement (66) und der Fluidausbreitungsrichtung (X1, X2) gebildeten Winkels zwischen 70° und 110° liegt.

7. Schaufel nach einem der vorstehenden Ansprüche, wobei sich die Störelemente (66) durch Bilden von einem Winkel größer als ein Winkel A erstrecken, der in Bezug auf eine parallele Ebene zu den aufeinanderfolgenden Herstellungsschichten vordefiniert ist, die den aerodynamischen Teil der Schaufel darstellen, wobei diese Störelemente diesseits desselben bei der Herstellung gestützt werden müssten, wobei der Winkel A vorzugsweise größer als 30° ist.

8. Schaufel nach einem der vorstehenden Ansprüche, wobei sich die Störelemente (66) durch Bilden von vorzugsweise einem Winkel kleiner als 70° in Bezug auf eine Ebene parallel zu den aufeinanderfolgenden Schichten, die die Schaufel darstellen, erstrecken.

9. Schaufel nach einem der vorstehenden Ansprüche, wobei die Störelemente Stäbe mit zylindrischem Querschnitt mit einem Durchmesser in der Größenordnung von 1 mm sind.

10. Triebwerk eines Luftfahrzeugs, umfassend mindestens eine Schaufel nach einem der vorstehenden Ansprüche.

11. Verfahren zur additiven Herstellung einer Schaufel nach einem der Ansprüche 1 bis 9, durch Stapeln von Werkstoffschichten, die die Schaufel von ihrer Vorderkante an darstellen, auf einer Platte T, bei dem die Spannweitenachse (EV) parallel zur Platte T liegt, und die Saugseitenwand mit der Patte T einen Winkel bildet, der mit Zunahme der gestapelten Schichten kleiner wird.

## Claims

1. Aircraft turbomachine vane comprising an aerodynamic part (32) extending along a span axis (EV) and made of one piece by additive manufacturing, said aerodynamic part comprising a lower surface wall (37) and an upper surface wall (38) comprising respectively an inner lower surface face (67) and an inner upper surface face (68), these inner lower (67) and upper (68) surface faces facing one another and delimiting jointly an internal fluid passage (43) comprising at least one channel (44; 46) defining a general fluid propagation direction (X1; X2) therein, this channel being traversed by a plurality of flow disruptive elements (66) connecting the lower (37) and upper (38) surface walls each having a first connection point (66a) on the inner lower surface face (67), and a second connection point (66b) on the inner upper surface face (68),
**characterised in that** the flow disruptive elements extend in relation to the general fluid propagation direction (X1; X2) by forming a variable angle from one flow disruptive element to another relative to the general fluid propagation direction, and **in that** the flow disruptive elements (66) are irregularly spaced from one another such that the first connection points (66a) are arranged in a disorganised manner on the inner lower surface face (67), and/or the second connection points (66b) are arranged in a disorganised manner on the inner upper surface face (68).

2. Vane according to claim 1, **characterised in that** the internal fluid passage (43) comprises a first (44) and a second (46) channel each defining a fluid propagation direction (X1, X2) substantially parallel with the span axis (EV), these first (44) and second (46) channels being traversed by flow disruptive elements (66) the first (66a) and second (66b) connection points whereof do not follow a specific alignment along the fluid propagation direction (X1, X2).

3. Vane according to any of preceding claims, **characterised in that** for any connection point (66a, 66b) among the first connection points (66a) and/or the second connection points arranged in a disorganised manner, this connection point has around same a number N of other connection points forming a closed line, delimiting internally a space wherein the single any connection point is found, the distance between the latter and each of the N number of other connection points is different for at least three thereof, and preferably for each of them.

4. Vane according to any of preceding claims, **characterised in that**,
- in a view from inside the fluid passage (43), along a direction locally substantially orthogonal to and oriented towards the inner lower surface face (67), all the first connection points (66a) thereof are each arranged at the intersection between a primary imaginary line (L1, L2, L3, L4, L5) extending parallel with the fluid propagation direction (X1, X2), and a secondary imaginary line (F1, F2, F3, F4, F5) perpendicular to the primary imaginary line, all of the first imaginary lines being all distinct from one another and all of the second imaginary lines being all distinct from one another; and/or
- in a view from inside the fluid passage (43), along a direction locally substantially orthogonal to and oriented towards the inner upper surface face (68), all the second connection points (66b) thereof are each arranged at the intersection between a primary imaginary line extending parallel with the fluid propagation direction (X1, X2), and a secondary imaginary line perpendicular to the primary imaginary line, all of the first imaginary lines between all distinct from one another and all of the second imaginary lines being all distinct from one another.

5. Vane according to any of preceding claims, wherein the flow disruptive elements are spaced pairwise at the nearest point by a distance enabling fluid flow, said distance being comprised between 2 and 10 mm.

6. Vane according to any of preceding claims, wherein the value of the angle formed between each flow disruptive element (66) and the fluid propagation direction (X1; X2) is between 70 and 110°.

7. Vane according to any of preceding claims, wherein the flow disruptive elements (66) extend by forming an angle greater than a predefined angle (A) with respect to a parallel plane with the successive manufacturing layers forming the aerodynamic part of the vane below which these flow disruptive elements are supported during manufacture, angle (A) being preferably greater than 30°.

8. Vane according to any of preceding claims, wherein the flow disruptive elements (66) extend by forming an angle of less than 70° with respect to a parallel plane with the successive layers forming the vane.

9. Vane according to any of preceding claims, wherein the flow disruptive elements are bars with a cylindrical cross-section of diameter of the order of 1mm.

10. Aircraft engine comprising at least one vane according to any of preceding claims.

11. Additive manufacturing method of a vane according to any of claims 1 to 9, by stacking on a plate (T) of material layers forming the vane from the leading edge thereof, during which the span axis (EV) is parallel with the plate (T) and the upper surface wall forms with the plate (T) an angle which decreases with the stacked layers.
